# EUROPEAN PATENT APPLICATION

(11) **EP 4 407 245 A1**
(43) Date of publication of application: **31.07.2024**
(21) Application number: 22872120.5
(22) Date of filing: 23.09.2022
(51) Int. Cl.: F24F 11/30, F24F 11/56, F24F 11/64, F24F 11/65, F24F 11/70, F24F 11/88, H02M 1/42, H02H 3/087, H02H 1/00

(54) **AIR CONDITIONER AND CONTROL METHOD FOR AIR CONDITIONER**

(30) Priority: 23.09.2021 CN 202111114255; 05.11.2021 CN 202111304701; 05.11.2021 CN 202122706411 U
(71) Applicant: Hisense (Guangdong) Air Conditioning Co., Ltd., Jiangmen, Guangdong 529085 (CN)
(72) Inventor: LI, Xidong, Jiangmen, Guangdong 529085 (CN)
(74) Representative: Casalonga
(86) International application number: PCT/CN2022/120901
(87) International publication number: WO 2023/046076

(57) **Abstract**

Some embodiments of the present disclosure provide an air conditioner, comprising a power supply circuit, a first sampling circuit, and a controller. The controller is connected to the power supply circuit and the first sampling circuit, and is configured to: acquire a preset operating current value of the air conditioner at each detection stage of at least one detection stage; control the air conditioner to operate using the preset operating current value of each detection stage of the at least one detection stage as a current value of the operating current, and acquire a bus voltage value of the corresponding detection stage; acquire at least two voltage differences according to the bus voltage value of each detection stage of the at least one detection stage; determine a target operating current of the air conditioner according to the at least two voltage difference values and a preset threshold; and control the air conditioner to operate using the target operating current as the operating current.

## Description

This application claims priorities to Chinese Patent Application No. 202111114255.7, filed on September 23, 2021, Chinese Patent Application No. 202111304701.0, filed on November 5, 2021, and Chinese Patent Application No. 202122706411.0, filed on November 5, 2021, which are incorporated herein by reference in their entireties.

### TECHNICAL FIELD

The present disclosure relates to the field of air conditioners, and in particular, to an air conditioner and a control method for an air conditioner.

### BACKGROUND

Generally, an air conditioner may start operating after being connected to a commercial electric power. The commercial electric power comes from the power grid, and stability of the power grid has a relatively direct impact on stability of operation of the air conditioner.

### SUMMARY

Some embodiments of the present disclosure provide an air conditioner, and the air conditioner includes a power supply circuit, a first sampling circuit, and a controller. The power supply circuit is connected to an alternating current power supply, and is configured to provide a working current to a load of the air conditioner according to the alternating current power supply. The first sampling circuit is connected to the power supply circuit, and is configured to obtain a bus voltage value of the power supply circuit based on the working current. The controller is connected to the power supply circuit and the first sampling circuit, and is configured to obtain a preset operating current value of the air conditioner in each detection phase of at least one detection phase; control the air conditioner to operate with the preset operating current value of each detection phase of the at least one detection phase as a current value of an operating current, and obtain a bus voltage value of a corresponding detection phase; obtain at least two voltage differences according to a bus voltage value of each detection phase of the at least one detection phase; determine a target operating current of the air conditioner according to the at least two voltage differences and preset thresholds; and control the air conditioner to operate with the target operating current as the operating current.

Some embodiments of the present disclosure provide a control method for an air conditioner, the control method may be applied to the air conditioner in the above embodiments and is executed by the controller. The control method may include: obtaining a preset operating current value of the air conditioner in each detection phase of at least one detection phase; controlling the air conditioner to operate with the preset operating current value of each detection phase of the at least one detection phase as a current value of an operating current, and obtaining a bus voltage value of a corresponding detection phase; obtaining at least two voltage differences according to a bus voltage value of each detection phase of the at least one detection phase; determining a target operating current of the air conditioner according to the at least two voltage differences and preset thresholds; and controlling the air conditioner to operate with the target operating current as the operating current.

### BRIEF DESCRIPTION OF THE DRAWINGS

In order to describe technical solutions of the present disclosure more clearly, the accompanying drawings to be used in some embodiments of the present disclosure will be introduced briefly. However, the accompanying drawings to be described below are merely accompanying drawings of some embodiments of the present disclosure, and a person having ordinary skill in the art may obtain other drawings according to these drawings. In addition, accompanying drawings in the following description may be regarded as schematic diagrams, and are not limitations on an actual size of a product, an actual process of a method and an actual timing of a signal involved in the embodiments of the present disclosure.
FIG. 1 is a block diagram of a circuit of an air conditioner, in accordance with some embodiments;
FIG. 2 is a circuit diagram of an air conditioner, in accordance with some embodiments;
FIG. 3 is a waveform diagram of a preset operating current value and a bus voltage value in a detection phase, in accordance with some embodiments;
FIG. 4 is a waveform diagram of a preset operating current value and a bus voltage value in another detection phase, in accordance with some embodiments;
FIG. 5 is a block diagram of a circuit of another air conditioner, in accordance with some embodiments;
FIG. 6 is a circuit diagram of another air conditioner, in accordance with some embodiments;
FIG. 7 is a block diagram of a circuit of yet another air conditioner, in accordance with some embodiments;
FIG. 8 is a waveform diagram of a working current, a first voltage signal, a second voltage signal, a third voltage signal, a third voltage signal, and a pulse signal output by a controller, in accordance with some embodiments; and
FIG. 9 is a flow diagram of a control method for an air conditioner, in accordance with some embodiments.

### DETAILED DESCRIPTION

The technical solutions in some embodiments of the present disclosure will be described clearly and completely with reference to the accompanying drawings. However, the described embodiments are merely some but not all of embodiments of the present disclosure. All other embodiments obtained on the basis of the embodiments of the present disclosure by a person of ordinary skill in the art shall be included in the protection scope of the present disclosure.

Unless the context requires otherwise, throughout the description and claims, the term "comprise" and other forms thereof such as the third-person singular form "comprises" and the present participle form "comprising" are construed as an open and inclusive meaning, i.e., "included, but not limited to". In the description of the specification, the terms such as "one embodiment", "some embodiments", "exemplary embodiments", "example", "specific example" or "some examples" are intended to indicate that specific features, structures, materials or characteristics related to the embodiment(s) or example(s) are included in at least one embodiment or example of the present disclosure. Schematic representations of the above terms do not necessarily refer to the same embodiment(s) or example(s). In addition, the specific features, structures, materials, or characteristics may be included in any one or more embodiments or examples in any suitable manner.

Hereinafter, the terms such as "first" and "second" are used for descriptive purposes only, but are not to be construed as indicating or implying the relative importance or implicitly indicating the number of indicated technical features. Thus, the features defined with "first" and "second" may explicitly or implicitly include one or more of the features. In the description of the embodiments of the present disclosure, the term "a plurality of" or "the plurality of" means two or more unless otherwise specified.

In the description of some embodiments, the expressions "coupled" and "connected" and derivatives thereof may be used. The term "connected" should be understood in a broad sense. For example, the term "connected" may represent a fixed connection, a detachable connection, or connected as an integral body; and the term "connected" may be directly "connected" or indirectly "connected" through an intermediate medium. For example, the term "connected" may be used in the description of some embodiments to indicate that two or more components are in direct physical contact or electrical contact with each other. As another example, the term "coupled" may be used in the description of some embodiments to indicate that two or more components are in direct physical or electrical contact. However, the term "coupled" or "communicatively coupled" may also indicate that two or more components are not in direct contact with each other, but still cooperate or interact with each other. The embodiments disclosed herein are not necessarily limited to the context herein.

As used herein, the term "if", depending on the context, is optionally construed as "when" or "in a case where" or "in response to determining that" or "in response to detecting". Similarly, depending on the context, the phrase "if it is determined that" or "if [a stated condition or event] is detected" is optionally construed as "in a case where it is determined that" or "in response to determining that" or "in a case where [the stated condition or event] is detected" or "in response to detecting [the stated condition or event]".

The phrase "applicable to" or "configured to" as used herein means an open and inclusive expression, which does not exclude devices that are applicable to or configured to perform additional tasks or steps.

As used herein, the term such as "parallel", "perpendicular" or "equal" includes a stated condition and a condition similar to the stated condition. A range of the similar condition is within an acceptable range of deviation, and the acceptable range of deviation is determined by a person of ordinary skill in the art in consideration of measurement in question and errors associated with measurement of a particular quantity (i.e., limitations of a measurement system). For example, the term "parallel" includes absolute parallelism and approximate parallelism, and an acceptable range of deviation of the approximate parallelism may be a deviation within 5°; the term "perpendicular" includes absolute perpendicularity and approximate perpendicularity, and an acceptable range of deviation of the approximate perpendicularity may also be a deviation within 5°; and the term "equal" includes absolute equality and approximate equality, and an acceptable range of deviation of the approximate equality may be a difference between two equals being less than or equal to 5% of either of the two equals.

Exemplary embodiments are described herein with reference to sectional views and/or plan views as idealized exemplary drawings. In the drawings, thicknesses of layers and sizes of regions are enlarged for clarity. Variations in shapes relative to the accompanying drawings due to, for example, manufacturing technologies and/or tolerances may be envisaged. Therefore, the exemplary embodiments should not be construed as being limited to the shapes of the regions shown herein, but including deviations in the shapes due to, for example, manufacturing. For example, an etched region shown in a rectangular shape generally has a feature of being curved. Therefore, the regions shown in the accompanying drawings are schematic in nature, and their shapes are not intended to show actual shapes of regions in apparatuses, and are not intended to limit the scope of the exemplary embodiments.

Generally, an air conditioner includes an outdoor unit and an indoor unit. The indoor unit is installed in indoor space and the outdoor unit of the air conditioner is installed outdoors. The outdoor unit of the air conditioner may include a compressor, an outdoor heat exchanger and an outdoor fan, and the indoor unit includes an indoor heat exchanger. Either of the indoor heat exchanger and the outdoor heat exchanger may be any of a surface heat exchanger, a regenerative heat exchanger, a fluid connection indirect heat exchanger and a direct contact heat exchanger, and other types of heat exchangers are also contemplated within the scope of the present disclosure. The air conditioner further includes an expansion valve, and the expansion valve may be disposed in the indoor unit or the outdoor unit of the air conditioner.

During the operation of the air conditioner, a cyclic process of regulating temperature may include a compression process, a condensation process, an expansion process and an evaporation process. In the compression process, the compressor compresses a low-temperature and low-pressure gas-phase refrigerant into a high-temperature and high-pressure gas-phase refrigerant. In the condensation process, the high-temperature and high-pressure gas-phase refrigerant enters a condenser, and is condensed into a liquid-phase refrigerant and releases heat. In the expansion process, the liquid-phase refrigerant passes through the expansion valve and is expanded into a low-pressure liquid-phase refrigerant. In the evaporation process, the low-pressure liquid-phase refrigerant enters the evaporator, absorbs heat in the environment, and is evaporated into a low-temperature and low-pressure gas-phase refrigerant. The low-temperature and low-pressure gas-phase refrigerant may return to the compressor and enter a compression process of a next cycle. The circulation of refrigerant in the compressor, the condenser, the expansion valve and the evaporator enables the air conditioner to regulate the temperature of the indoor space.

In different operating conditions of the air conditioner, either of the indoor heat exchanger and the outdoor heat exchanger may be used as a condenser or an evaporator. For example, in a case where the air conditioner is used to increase the temperature of the indoor space, the indoor heat exchanger serves as a condenser to operate in the condensation process, and the outdoor heat exchanger serves as an evaporator to operate in the evaporation process. For example, in a case where the air conditioner is used to reduce the temperature of the indoor space, the indoor heat exchanger serves as an evaporator to operate in the evaporation process, and the outdoor heat exchanger serves as a condenser to operate in the condensation process. The outdoor fan allows heat displaced by the outdoor heat exchanger to enter the external environment rapidly.

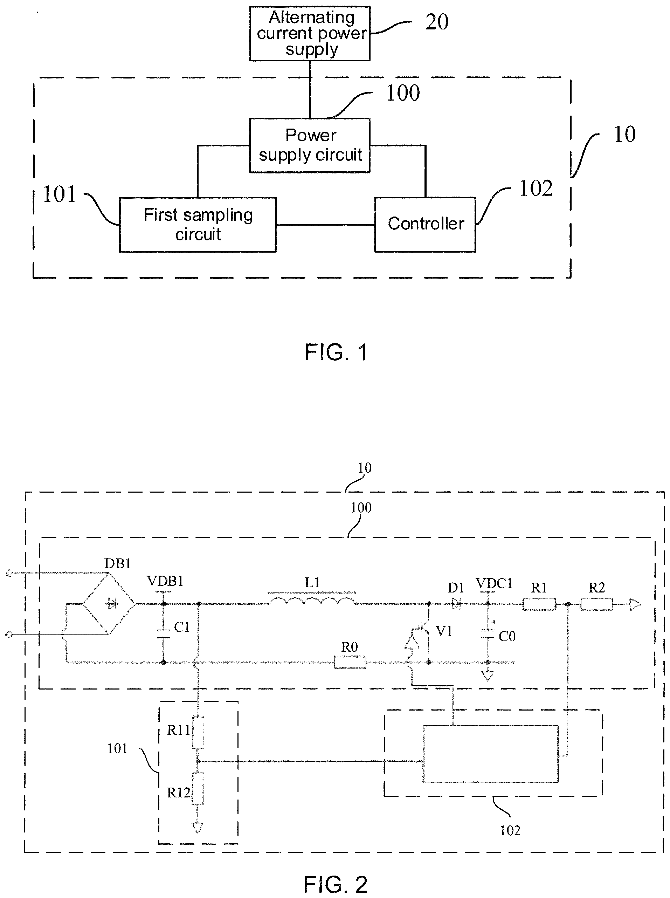

In some embodiments, as shown in FIGS. 1 and 2, the air conditioner may include a power supply circuit 100. The power supply circuit 100 may be connected to an alternating current power supply 20 and configured to provide a working current for a load of the air conditioner 10 according to the alternating current power supply 20. For example, the power supply circuit 100 may include a switch transistor V1, and the power supply circuit 100 generates the working current of the air conditioner if the switch transistor V1 is turned on.

For example, the alternating current power supply 20 may be a power grid. In a case where an alternating current provided by the power grid is relatively stable, the air conditioner operates in a relatively stable state. If the power grid is disturbed, for example, in a case where the power supply system needs to switch lines or equipment, the power supply capacity of the power grid may be affected, which may cause the alternating current provided by the power grid to be in an unstable state (e.g., the amplitude of the alternating current fluctuates). The instability of the alternating current may cause the working current generated by the power supply circuit 100 to fluctuate. If a current flowing into the switch transistor V1 is large, the current will cause a large impact on the switch transistor V1, thereby accelerating the aging of the electrical components and damaging the service life of the electrical components. In addition, the instability of the working current generated by the power supply circuit 100 may cause the operation of the air conditioner in an unstable state, and even cause a short circuit in the internal circuit of the air conditioner.

In view of this, some embodiments of the present disclosure provide an air conditioner. The air conditioner may adjust the working current of the air conditioner according to a bus voltage value provided by the power supply circuit 100, so as to keep the working current of the air conditioner stable, thereby avoiding the short circuit in the internal circuit of the air conditioner.

As shown in FIG. 1, the air conditioner 10 further includes a first sampling circuit 101 and a controller 102.

The first sampling circuit 101 is connected to the power supply circuit 100 and configured to collect the bus voltage value of the air conditioner 10 according to the working current of the air conditioner 10. The controller 102 is connected to the power supply circuit 100 and the first sampling circuit 101, and configured to: obtain a preset operating current value of the air conditioner 10 in each detection phase of at least one detection phase; control the air conditioner 10 to operate with the preset operating current value of each detection phase of the at least one detection phase as a current value of an operating current, and obtain a bus voltage value of a corresponding detection phase; obtain at least two voltage differences according to the bus voltage value of each detection phase of the at least one detection phase; determine a target operating current of the air conditioner according to the at least two voltage differences and preset thresholds; and control the air conditioner to operate with the target operating current as the operating current.

For example, the air conditioner 10 enters the detection phase after being powered on, so as to detect the power supply capacity of the power grid. The detection phase may include at least one preset detection phase, and in the at least one preset detection phase, a preset detection phase corresponds to an operating phase of the air conditioner 10. For example, in a process of the air conditioner 10 being powered on to operating stably, the operating phases of the air conditioner 10 may include: a standby phase, a starting phase, a frequency-boost phase, a frequency-reduction phase and a shutdown phase. In the standby phase, the air conditioner 10 does not operate or has the operating current close to 0. For example, the air conditioner 10 has been connected to the power grid, but has not received an instruction (e.g., the instruction from the user may be a temperature setting instruction) from the user. In this case, the operation of the air conditioner 10 is in the standby phase. In the starting phase, the air conditioner 10 starts and operates. For example, the air conditioner 10 may start to operate in response to receiving the instruction from the user, and the air conditioner 10 is in the starting phase. In the frequency-boost phase, the air conditioner 10 may change an operating frequency according to a difference between a temperature set by the user and a room temperature. In a case where the room temperature does not reach the temperature set by the user, the air conditioner 10 will continue to raise the operating frequency, so as to make the room temperature reach the temperature set by the user. In a case where the room temperature reaches the temperature set by the user, the air conditioner 10 starts to reduce the frequency. In a case where the air conditioner reduces the operating frequency, the operating phase of the air conditioner 10 is the frequency-reduction phase. In the shutdown phase, the air conditioner 10 does not operate or has the operating current close to 0. For example, the air conditioner 10 may stop operating in response to receiving the instruction from the user.

For example, in each preset detection phase, the preset operating current value may be set according to the operating phase corresponding to the preset detection phase. The bus voltage value in the preset detection phase may be obtained when the air conditioner operates at the preset operating current value. The power supply capacity of the power grid may be identified according to the change of the bus voltage value. Then, the controller 102 may set the target operating current of the air conditioner 10 according to the identified power supply capacity of the power grid, so that the operation of the air conditioner 10 is compatible with the power supply capacity of the power grid.

In this way, in a case where the power grid is unstable, the air conditioner 10 may still maintain a stable operating state, thereby prolonging the service life of the electronics components of the air conditioner 10 and avoiding damage to the electronic components inside the air conditioner.

The controller 102 is or includes, for example, a central processing unit (CPU), a microprocessor, a microcontroller unit (MCU), an application specific integrated circuit (ASIC), a chip, or a logic control device (e.g., a field programmable gate array (FPGA)).

In a case where the at least one detection phase includes a standby detection phase, a starting detection phase and a frequency-boost detection phase, the standby detection phase corresponds to the standby phase of the operating phase of the air conditioner, the starting detection phase corresponds to the starting phase of the operating phase of the air conditioner, and the frequency-boost detection phase corresponds to the frequency-boost phase of the operating phase of the air conditioner. The preset operating current value may include a first preset operating current value in the standby detection phase, a second preset operating current value in the starting detection phase, and a third preset operating current value in the frequency-boost detection phase. The second preset operating current value is greater than the first preset operating current value. The bus voltage value includes a first bus voltage value in the standby detection phase, a second bus voltage value in the starting detection phase, and a third bus voltage value in the frequency-boost detection phase.

The method for obtaining the bus voltage value through the first sampling circuit 101 is exemplarily described below with reference to FIG. 2.

As shown in FIG. 2, the first sampling circuit 101 may include a first resistor R11 and a second resistor R12. A first terminal of the first resistor R11 is connected to a first bus of the power supply circuit 100, a second terminal of the first resistor R11 is connected to a first terminal of the controller 102, and a second terminal of the controller 102 is connected to the first bus of the power supply circuit 100. A first terminal of the second resistor R12 is connected to the second terminal of the first resistor R11, and a second terminal of the second resistor R12 is grounded. In this way, in a case where the power supply circuit 100 generates the working current, the working current may flow into the first terminal of the first resistor R11 and the controller 102 sequentially through the first bus of the power supply circuit 100, and return to the first bus of the power supply circuit 100. The controller 102 may obtain the bus voltage value according to the working current and the first resistor R11.

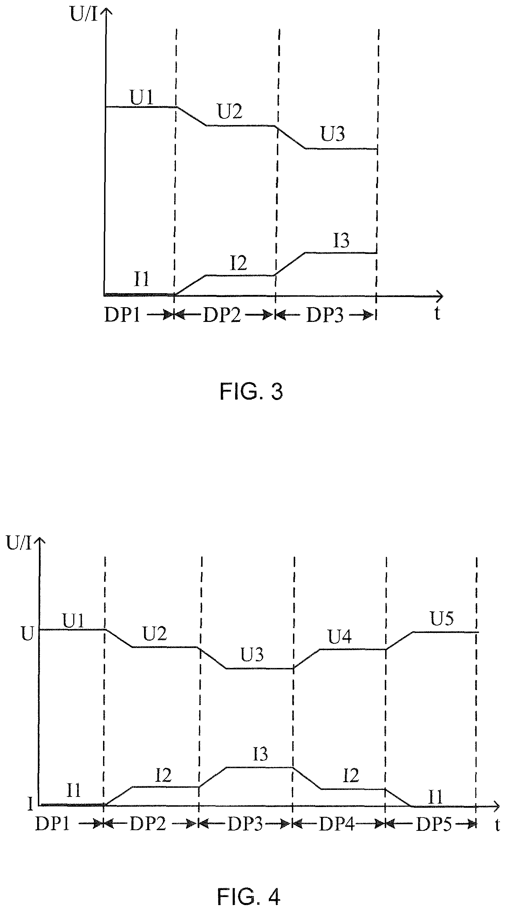

As shown in FIG. 3, in the standby detection phase DP1, the controller 102 may control the air conditioner 10 to operate with the first preset operating current value I1 as the operating current, and the first sampling circuit 101 may sample the bus voltage value of the power supply circuit 100, so that the controller 102 may obtain the first bus voltage value U1. For example, in the standby detection phase DP1, the first preset operating current value I1 may be equal to 0.

In the starting detection phase DP2, the controller 102 may control the air conditioner 10 to operate with the second preset operating current value I2 as the operating current, and the first sampling circuit 101 may sample the bus voltage value of the power supply circuit 100, so that the controller 102 may obtain the second bus voltage value U2. For example, a power demand of the air conditioner 10 in the starting detection phase DP2 is greater than a power demand of the air conditioner 10 in the standby detection phase DP1, and the second preset operating current value I2 may be set to be greater than the first preset operating current value 11, that is, the second preset operating current value I2 is greater than 0. For example, taking a maximum allowable operating current value Imax of the air conditioner 10 as a reference, the second preset operating current value I2 may be set as 25% of Imax (i.e., I2 = 25% × Imax).

In the frequency-boost detection phase DP3, the controller 102 may control the air conditioner 10 to operate with the third preset operating current value I3 as the operating current, and the first sampling circuit 101 may sample the bus voltage value of the power supply circuit 100, so that the controller 102 may obtain the third bus voltage value U3. For example, a power demand of the air conditioner 10 in the frequency-boost detection phase DP3 is greater than the power demand of the air conditioner 10 in the starting detection phase DP2, and the third preset operating current value I3 may be set to be greater than the second preset operating current value I2. For example, the third preset operating current value I3 may be set as 50% of Imax (i.e., I3 = 50% × Imax).

In a case where the controller 102 obtains the first bus voltage value U1, the second bus voltage value U2 and the third bus voltage value U3, the controller 102 may identify the power supply capacity of the power grid according to the change of the three voltage values. In this case, the controller 102 is configured to: obtain a first voltage difference and a second voltage difference according to the first bus voltage value, the second bus voltage value and the third bus voltage value, the first voltage difference being a difference between the third bus voltage value and the second bus voltage value, and the second voltage difference being a difference between the third bus voltage value and the first bus voltage value; and obtain the target operating current of the air conditioner according to the first voltage difference, the second voltage difference and the preset thresholds.

The controller 102 may obtain the change of the bus voltage value of the power supply circuit 100 in three phases of the standby detection phase DP1, the starting detection phase DP2 and the frequency-boost detection phase DP3 through the first voltage difference and the second voltage difference, so as to identify the power supply capacity of the power grid, and further obtain the target operating current of the air conditioner 10.

In some embodiments, a plurality of preset thresholds may be set to subdivide the identified power supply capacity of the power grid, so that the target operating current of the air conditioner 10 is rather compatible with the power supply capacity of the power grid. For example, the identified power supply capacity of the power grid may be subdivided into a plurality of different levels, such as six levels or four levels. The number of the plurality of different levels into which the identified power supply capacity of the power grid is subdivided is not limited in the present disclosure. The following embodiments are described by considering an example where the identified power supply capacity of the power grid is subdivided into four levels. For example, the four levels include level I, level II, level III and level IV (the power supply capacity of level I is greater than the power supply capacity of level II, the power supply capacity of level II is greater than the power supply capacity of level III, and the power supply capacity of level III is greater than the power supply capacity of level IV (i.e., power supply capacity of level I > power supply capacity of level II > power supply capacity of level III > power supply capacity of level IV)). It can be understood that the power supply capacity of the power grid of level I indicates that the power supply capacity of the power grid is strong and the electric power is sufficient, and the power supply capacity of the power grid of level IV indicates that the power supply capacity of the power grid is weak and the electric power is insufficient.

For example, the preset thresholds may include a first preset threshold and a second preset threshold. The controller 102 may be configured to determine that the target operating current is the maximum allowable operating current value if the first voltage difference and the second voltage difference satisfy a first condition. The first condition includes that the first voltage difference is less than the first preset threshold, and the second voltage difference is less than the second preset threshold.

For example, both the first preset threshold and the second preset threshold may be greater than 0, so as to avoid errors caused by the power supply circuit 100 or the first sampling circuit 101. If the first voltage difference ΔU1 is less than the first preset threshold T1, and the second voltage difference ΔU2 is less than the second preset difference threshold T2, it indicates that the third bus voltage value U3 is approximately equal to the second bus voltage value U2, and the third bus voltage value U3 is approximately equal to the first bus voltage value U1. That is, the power supply capacity of the current power grid is level I. Therefore, the target operating current may be determined as the maximum allowable operating current value Imax. That is, after the detection phase ends, in a case where the power supply capacity of the power grid is level I, the controller 102 may control the air conditioner 10 to operate with the maximum allowable operating current value Imax as the operating current, so that the operating state of the air conditioner 10 is compatible with the strong power supply capacity of the power grid. It can be understood that in a case where the power supply capacity of the power grid is strong and the electric power is sufficient, the maximum operating current of the air conditioner 10 may be the maximum allowable operating current value Imax.

Alternatively, the preset thresholds may further include a third preset threshold and a fourth preset threshold. The controller 102 may be configured to determine that the target operating current is a first operating current value if the first voltage difference and the second voltage difference satisfy the second condition. The second condition includes that the first voltage difference is greater than the first preset threshold and less than the third preset difference threshold, and the second voltage difference is greater than the second preset threshold and less than the fourth preset threshold. The first operating current value is less than the maximum allowable operating current value, the third preset difference threshold is greater than the first preset threshold, and the fourth preset threshold is greater than the second preset threshold.

If the first voltage difference ΔU1 is greater than the first preset threshold T1 and less than the third preset threshold T3, and the second voltage difference ΔU2 is greater than the second preset threshold T2 and less than the fourth preset threshold T4, it indicates that the power supply capacity of the current power grid is level II. However, if the air conditioner 10 operates with the maximum allowable operating current value Imax as the operating current, the operation of the air conditioner 10 may lower the voltage of the power grid, causing the power supply capacity of the power grid to deteriorate. In order to avoid this case, for example, the target operating current may be determined as the first operating current value OC1, and the first operating current value OC1 is less than the maximum allowable operating current value Imax. For example, taking the maximum allowable operating current value Imax of the air conditioner 10 as a reference, the first operating current value OC1 may be set as 75% of Imax (i.e., C1 = 75% × Imax). That is, after the detection phase ends, in a case where the electric power is relatively sufficient, the controller 102 may control the air conditioner 10 to operate with the first operating current value OC1 as the operating current, so that the operating state of the air conditioner 10 is compatible with the relatively strong power supply capacity of the power grid. It can be understood that, in a case where the power supply capacity of the power grid is level II, the maximum operating current of the air conditioner 10 may be the first operating current value OC1.

In some embodiments, the preset thresholds may further include a fifth preset threshold and a sixth preset threshold. The controller 102 is configured to determine that the target operating current is a second operating current value if the first voltage difference and the second voltage difference satisfy the third condition. The third condition includes that the first voltage difference is greater than the third preset threshold and less than the fifth preset threshold, and the second voltage difference is greater than the fourth preset threshold and less than the sixth preset threshold. The second operating current value is less than the first operating current value, the fifth preset threshold is greater than the third preset threshold, and the sixth preset threshold is greater than the fourth preset threshold.

If the first voltage difference ΔU1 is greater than the third preset threshold T3 and less than the fifth preset threshold T5, and the second voltage difference ΔU2 is greater than the fourth preset threshold T4 and less than the sixth preset threshold T6, it indicates that the power supply capacity of the current power grid is level III. In order to avoid a case where the operation of the air conditioner 10 lowers the voltage of the power grid, for example, the target operating current may be determined as the second operating current value OC2, and the second operating current value OC2 is less than the first operating current value OC1. For example, taking the maximum allowable operating current value Imax of the air conditioner 10 as a reference, the second operating current value OC2 may be set as 50% of Imax (i.e., C2 = 50% × Imax). That is, after the detection phase ends, in a case where the electric power is relatively insufficient, the controller 102 may control the air conditioner 10 to operate with the second operating current value OC2 lower than the first operating current value OC1 as the operating current, so that the operating state of the air conditioner 10 is compatible with the relatively weak power supply capacity of the power grid. It can be understood that in a case where the power supply capacity of the power grid is level III, the maximum operating current of the air conditioner 10 may be the second operating current value OC2.

Alternatively, the controller 102 is configured to determine that the target operating current is a third operating current value if the first voltage difference and the second voltage difference satisfy a fourth condition. The fourth condition includes that the first voltage difference is greater than the fifth preset threshold, and the second voltage difference is greater than the sixth preset threshold. The third operating current value is less than the second operating current value.

If the first voltage difference ΔU1 is greater than the fifth preset threshold T5 and the second voltage difference ΔU2 is greater than the sixth preset threshold T6, it indicates that the power supply capacity of the current power grid is level IV. In order to avoid a case where the operation of the air conditioner 10 lowers the voltage of the power grid, for example, the target operating current may be determined as the third operating current value OC3, and the third operating current value OC3 is less than the second operating current value OC2. For example, taking the maximum allowable operating current value Imax of the air conditioner 10 as a reference, the third operating current value OC3 may be set as 30% of Imax (i.e., C3 = 30% × Imax). That is, after the detection phase ends, in a case where the electric power is insufficient, the controller 102 may control the air conditioner 10 to operate with the third operating current value OC3 as the operating current, so that the operating state of the air conditioner 10 is compatible with the weak power supply capacity of the power grid. It can be understood that in a case where the power supply capacity of the power grid is IV, the maximum operating current of the air conditioner 10 may be the third operating current value OC3.

During the detection phase, the alternating current provided by the power grid may change. Thus, the bus voltage value obtained by the first sampling circuit may be inaccurate, so that the power supply capacity of the power grid identified by the controller 102 may be inaccurate.

In order to make the power supply capacity of the power grid identified by the controller 102 more accurate, in some embodiments, as shown in FIG. 4, the at least one detection phase may further include a frequency-reduction detection phase DP4 and a shutdown detection phase DP5. The frequency-reduction detection phase DP4 may correspond to the frequency-reduction phase of the air conditioner 10, and the shutdown detection phase DP5 may correspond to the shutdown phase of the air conditioner 10. The preset operating current value further includes a fourth preset operating current value in the frequency-reduction detection phase and a fifth preset operating current value in the shutdown detection phase. The bus voltage value includes a fourth bus voltage value in the frequency-reduction detection phase and a fifth bus voltage value in the shutdown detection phase. The fourth preset operating current value is the same as the second preset operating current value, and the fifth preset operating current value is the same as the second preset operating current value.

It can be understood that a method for the controller 102 to obtain the fourth bus voltage value U4 and the fifth bus voltage value U5 may refer to the method for the controller 102 to obtain the first bus voltage value U1 or the second bus voltage value U2 in the above embodiments, which will not be repeated here. As shown in FIG. 4, if the fourth preset operating current value I4 is the same as the second preset operating current value I2, the second bus voltage value U2 is approximately equal to the fourth bus voltage value U4 under normal conditions. If the fifth preset operating current value I5 is the same as the second preset operating current value 11, the first bus voltage value U1 is approximately equal to the fifth bus voltage value U5 under normal conditions.

For example, the controller 102 may determine the reliability of the power supply capacity of the power grid identified by the controller 102 according to the first bus voltage value U1, the second bus voltage value U2, the fourth bus voltage value U4, and the fifth bus voltage value U5, so as to improve the reliability of identifying the power supply capacity of the power grid, and further make the target operating current determined by the controller 102 compatible with the power supply capacity of the power grid.

In this case, the preset thresholds may further include a seventh preset threshold and an eighth preset threshold. The controller 102 is configured to obtain a third voltage difference and a fourth voltage difference according to the first bus voltage value, the second bus voltage value, the fourth bus voltage value and the fifth bus voltage value. The third voltage difference is a difference between the first bus voltage value and the fifth bus voltage value, and the fourth voltage difference is a difference between the second bus voltage value and the fourth bus voltage value. In addition, the controller 102 is configured to determine the target operating current according to the first voltage difference, the second voltage difference, the first condition, the second condition, the third condition and the fourth condition if the third voltage difference and the fourth voltage difference satisfy a fifth condition. The fifth condition includes that the third voltage difference is less than or equal to the seventh preset threshold, and the fourth voltage difference is less than or equal to the eighth preset threshold.

If the third voltage difference ΔU3 is less than or equal to the seventh preset threshold T7, and the fourth voltage difference ΔU4 is less than or equal to the eighth preset threshold T8, the second bus voltage value U2 and the fourth bus voltage value U4 that are obtained by the controller 102 have small change values, and the first bus voltage value U1 and the fifth bus voltage value U5 have small change values. This indicates that the power supply capacity of the power grid identified by the controller 102 is reliable. Therefore, the target operating current may be determined according to the first voltage difference, the second voltage difference, the first condition, the second condition, the third condition and the fourth condition.

Alternatively, the controller 102 is configured to control the air conditioner to operate in the at least one detection phase again if the third voltage difference and the fourth voltage difference satisfy a sixth condition, and determine whether the third voltage difference and the fourth voltage difference satisfy the fifth condition. If the third voltage difference and the fourth voltage difference satisfy the fifth condition, the controller 102 determines the target operating current according to the first voltage difference, the second voltage difference, the first condition, the second condition, the third condition and the fourth condition. If the third voltage difference and the fourth voltage difference do not satisfy the fifth condition, the controller 102 obtains the number of execution of the detection phase, and determines whether the number of execution of the detection phase reaches a preset number threshold. If the number of execution does not reach the number threshold, the controller 102 controls the air conditioner to operate in the at least one detection phase again, and determines whether the third voltage difference and the fourth voltage difference satisfy the fifth condition. If the number of execution reaches the number threshold, the controller 102 determines the target operating current according to the first voltage difference, the second voltage difference, the first condition, the second condition, the third condition and the fourth condition.

If the third voltage difference ΔU3 is greater than the seventh preset threshold T7, or the fourth voltage difference ΔU4 is greater than the eighth preset threshold T8, the second bus voltage value U2 and the fourth bus voltage value U4 that are obtained by the controller 102 have large change values, or the first bus voltage value U1 and the fifth bus voltage value U5 have large change values. This indicates that the power supply capacity of the power grid identified by the controller 102 is unreliable and inaccurate.

In this case, the controller 102 may re-perform the operation of controlling the air conditioner 10 to enter the at least one detection phase, so as to identify the power supply capacity of the power grid. The controller 102 may repeatedly perform the operation of controlling the air conditioner 10 to enter the detection phase until the number of executions reaches the number threshold.

For example, in order to avoid affecting user experience due to the air conditioner 10 operating in the at least one detection phase too many times, the number threshold may be set according to usage environment or usage frequency of the air conditioner 10. If the number of executions reaches the number threshold, it indicates that the power supply capacity of the power grid identified by the controller 102 is still unreliable. In this case, in order to satisfy the requirements of the user for using the air conditioner, the target operating current may be determined according to the first voltage difference, the second voltage difference, the first condition, the second condition, the third condition, and the fourth condition.

Therefore, the controller 102 may not only determine the target operating current that is compatible with the power supply capacity of the power grid in a case where the identified power supply capacity of the power grid is reliable, but also determine the target operating current that is compatible with the identified power supply capacity of the power grid in a case where the user experience is not affected, and the requirements of the user for using the air conditioner is ensured.

In order to prevent the excessive working current of the air conditioner 10 from causing a large impact on the switch transistor V1 in a case where the identified power supply capacity of the power grid is unreliable, in some embodiments, the working current may be detected to determine whether the working current is abnormal, and the switch transistor V1 is turned off in a case where the working current is abnormal, so as to avoid the damage to the switch transistor V1 due to the impact of an excessive current on the switch transistor V1, thereby improving the safety and reliability of the operation of the air conditioner.

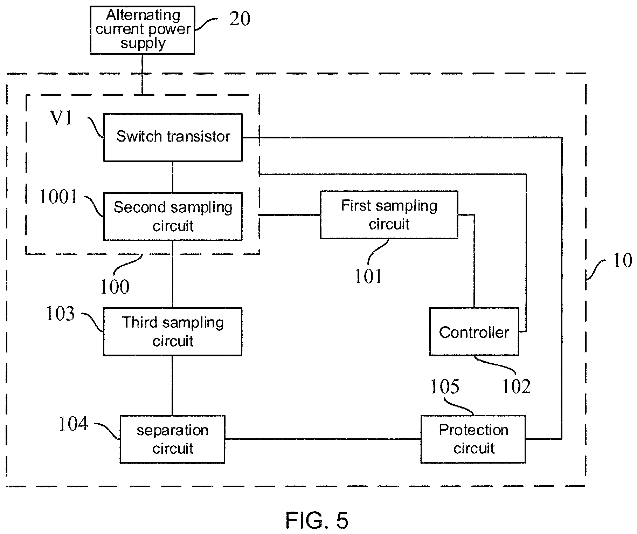

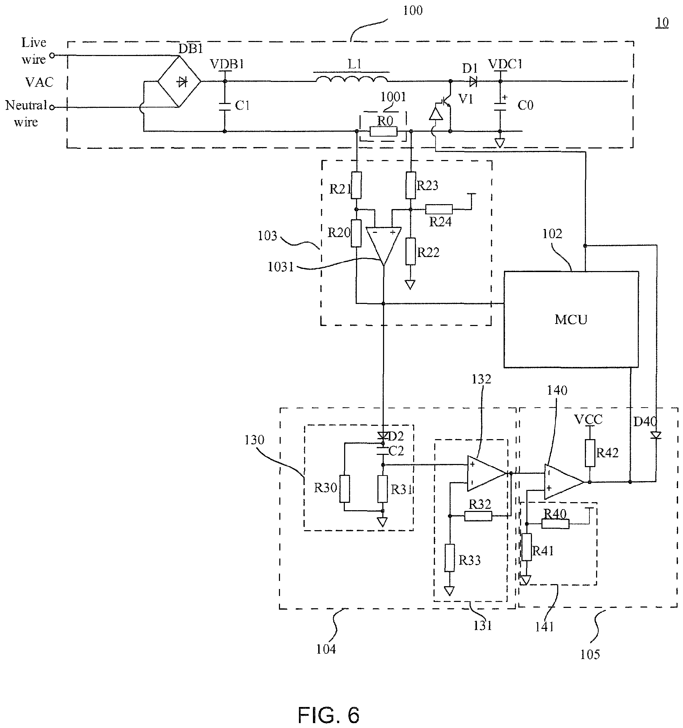

For example, as shown in FIGS. 5 and 6, the power supply circuit 100 further includes a second sampling circuit 1001, and the second sampling circuit 1001 is configured to output a first voltage signal according to the working current. It can be understood that the first voltage signal is a voltage signal converted from the working current, which may reflect a current signal of the working current. However, the first voltage signal may have a common mode interference, which may cause the first voltage signal to fail to accurately reflect the current signal of the working current.

In order to suppress the common mode interference, in some embodiments, the air conditioner 10 further includes a third sampling circuit 103. The third sampling circuit 103 is connected in parallel to both terminals of the second sampling circuit 1001, and configured to suppress the common mode interference of the first voltage signal, and obtain a second voltage signal according to the first voltage signal, so that the second voltage signal may accurately reflect the current signal of the working current.

In a case where the second voltage signal has a low value, it indicates that the working current has a low current value, which will not cause damage to the switch transistor V1. In a case where the second voltage signal has a high value, it indicates that the working current has a high current value, which may cause damage to the switch transistor V1. Therefore, the current value of the working current may be detected in a case where the second voltage signal has the high value. For example, in some embodiments, the air conditioner 10 further includes a separation circuit 104. The separation circuit 104 is connected to the third sampling circuit 103 and configured to detect a magnitude of the second voltage signal, and output a third voltage signal in a case where the value of the second voltage signal is greater than a first voltage threshold. It can be understood that the first voltage threshold may be set according to components included in the separation circuit 104.

In order to control the switch transistor V1 to be turned on or turned off according to the third voltage signal, in some embodiments, the air conditioner 10 may further include a protection circuit 105. The protection circuit 105 is connected to the separation circuit 104 and the switch transistor V1, and configured to detect a surge of the third voltage signal, output a first level signal in a case where the surge of the third voltage signal is greater than a second voltage threshold, and output a second level signal in a case where the surge of the third voltage signal is less than or equal to the second voltage threshold. The second voltage threshold may be set according to components included in the protection circuit 105.

In this way, the switch transistor V1 is configured to receive the first level signal or the second voltage signal, and to be in a turn-off state under control of the first level signal and in a turn-on state under control of the second level signal. The first level signal and the second level signal may be determined according to the type of the switch transistor V1. For example, as shown in FIG. 2, the following embodiments will take the type of the switch transistor V1 being a high-level conduction type (e.g., an N-type triode) as an example, the first level signal may be a low-level signal, and the second level signal may be a high-level signal.

In the following embodiments, specific structures of the power supply circuit 100, the second sampling circuit 1001, the third sampling circuit 103, the separation circuit 104 and the protection circuit 105 will be described with reference to FIGS. 2 and 6.

In some embodiments, as shown in FIGS. 2 and 6, the power supply circuit 100 may include a rectifying circuit DB1, a second capacitor C1, an inductor L1, a first capacitor C0 and a third diode D1. A first input terminal of the rectifying circuit DB1 is connected to a live wire of the alternating current power supply 20, a second input terminal of the rectifying circuit DB1 is connected to a neutral wire of the alternating current power supply 20, a first output terminal of the rectifying circuit DB1 is connected to a first terminal of the second capacitor C1, and a second output terminal of the rectifying circuit DB1 is connected to a first terminal of the second capacitor C1. A first terminal of the inductor L1 is connected to the first terminal of the second capacitor C1, and a second terminal of the inductor L1 is connected to an anode of the third diode D1. A cathode of the third diode D1 is connected to a first terminal of the first capacitor C0, and a second terminal of the first capacitor C0 is grounded. A second terminal of the switch transistor V1 is connected between the anode of the third diode D1 and the second terminal of the inductor L1, and a third terminal of the switch transistor V1 is connected to the second terminal of the first capacitor C0.

In this way, if the first terminal of the switch transistor V1 receives the first level signal, the switch transistor V1 is turned on, and the working current is in a rising state, so as to ensure the normal operation of the air conditioner 10. If the first terminal of the switch transistor V1 receives the second level signal, the switch transistor V1 is turned off, the inductor L1 freewheels through the third diode D1, and the working current may be in a falling state, so as to protect the air conditioner 10.

For example, as shown in FIG. 6, the second sampling circuit 1001 may include a sampling resistor R0. When the working current passes through the sampling resistor R0, a voltage exists across two terminals of the sampling resistor R0, and the sampling resistor R0 may output the first voltage signal. For example, the first voltage signal may be a detection voltage signal.

In order to suppress the common mode interference of the first voltage signal, in some embodiments, as shown in FIG. 6, the third sampling circuit 103 may include a third resistor R21, a fourth resistor R20, a fifth resistor R23, a sixth resistor R22, a seventh resistor R24 and a first differential amplifier 1031. A first terminal of the third resistor R21 is connected to a first terminal of the second sampling circuit 1001, a second terminal of the third resistor R21 is connected to a first terminal of the fourth resistor R20, and a second terminal of the fourth resistor R20 is connected to an output terminal of the first differential amplifier 1031 and the separation circuit 104. A first terminal of the fifth resistor R23 is connected to a second terminal of the second sampling circuit 1001, a second terminal of the fifth resistor R23 is connected to a first terminal of the sixth resistor R22, and a second terminal of the sixth resistor R22 is grounded. A negative input terminal of the first differential amplifier 1031 is connected between the second terminal of the third resistor R21 and the first terminal of the fourth resistor R20, a positive input terminal of the first differential amplifier 1031 is connected between the second terminal of the fifth resistor R23 and the first terminal of the sixth resistor R22, and the output terminal of the first differential amplifier 1031 is also connected to the separation circuit. A first terminal of the seventh resistor R24 is connected to the positive input terminal of the first differential amplifier 1031, and a second terminal of the seventh resistor R24 is connected to a first direct current power supply.

The first differential amplifier 1031 may effectively suppress the common mode interference, so that the noise of the output second voltage signal is relatively small. Therefore, the second voltage signal may reflect the working current relatively accurately. For example, the second voltage signal may be a low-noise sampling-adjusted voltage signal.

In order to output the third voltage signal in a case where the second voltage signal has a high value, in some embodiments, as shown in FIG. 6, the separation circuit 104 includes a differentiating circuit 130 and a second differential amplifier circuit 131. An input terminal of the differentiating circuit 130 is connected to the output terminal of the first differential amplifier 1031, and the differentiating circuit 130 is configured to detect a magnitude of the second voltage signal from the first differential amplifier 1031, and output a terminal voltage signal in a case where the value of the second voltage signal is greater than the first voltage threshold. The second differential amplifier circuit 131 is connected to an output terminal of the differentiating circuit 130, and is configured to adjust the terminal voltage signal and output the third voltage signal.

In some embodiments, as shown in FIG. 6, the differentiating circuit 130 includes a first diode D2, a third capacitor C2, an eighth resistor R31, and a ninth resistor R30. An anode of the first diode D2 is connected to the output terminal of the first differential amplifier 1031, a cathode of the first diode D2 is connected to a first terminal of the third capacitor C2, a second terminal of the third capacitor C2 is connected to a first terminal of the eighth resistor R31, and a second terminal of the eighth resistor R31 is grounded. A first terminal of the ninth resistor R30 is connected between the first terminal of the third capacitor C2 and the cathode of the first diode D2, and a second terminal of the ninth resistor R30 is grounded.

The second voltage signal output by the first differential amplifier 1031 enters the separation circuit 104 through the anode of the first diode D2, so that the separation circuit 104 may detect the magnitude of the second voltage signal. For example, if the second voltage signal causes the first diode D2 to be turned on, it indicates that the value of the second voltage signal is greater than a breakdown voltage value of the first diode D2. In this case, the second voltage signal charges the third capacitor C2 through the eighth resistor R31, so as to form the differentiating circuit. For example, the first voltage threshold may be the breakdown voltage value of the first diode D2.

If the second voltage signal maintains the magnitude, the voltage across both terminals of the eighth resistor R31 continues to increase. Therefore, the magnitude of the second voltage signal may be determined according to the voltage across both terminals of the eighth resistor R31. If the second voltage signal is in the falling state, the voltage across both terminals of the third capacitor C2 may be discharged through the ninth resistor R30 and the eighth resistor R31, and the voltage across both terminals of the ninth resistor R30 may be in the falling state. The voltage across both terminals of the eighth resistor R31 is transmitted to the second differential amplifier circuit 131. The second differential amplifier circuit 131 adjusts the second voltage signal and outputs the third voltage signal. For example, the third voltage signal may be a pulsating voltage signal.

In some embodiments, as shown in FIG. 6, the second differential amplifier circuit 131 includes a second differential amplifier 132, a tenth resistor R33 and an eleventh resistor R32. A positive input terminal of the second differential amplifier 132 is connected between the second terminal of the third capacitor C2 and the first terminal of the eighth resistor R31. A first terminal of the tenth resistor R33 is connected to a negative input terminal of the second differential amplifier 132, and a second terminal of the tenth resistor R33 is grounded. The eleventh resistor R32 is connected in parallel between the negative input terminal of the second differential amplifier 132 and an output terminal of the second differential amplifier 132.

In order to enable the protection circuit 105 to output the first level signal or the second level signal according to the received third voltage signal, in some embodiments, as shown in FIG. 6, the protection circuit 105 includes a comparator 140, a level output circuit 141, a twelfth resistor R42 and a second diode D40. An inverting terminal of the comparator 140 is connected to the output terminal of the second differential amplifier 132, a non-inverting terminal of the comparator 140 is connected to an output terminal of the level output circuit 141, and an output terminal of the comparator 140 is connected to a cathode of the second diode D40. An input terminal of the level output circuit 141 is connected to a second direct current power supply. A first terminal of the twelfth resistor R42 is connected to a third direct current power supply, and a second terminal of the twelfth resistor R42 is connected to the output terminal of the comparator 140. An anode of the second diode D40 is connected to a first terminal of the switch transistor V1.

In some embodiments, as shown in FIG. 6, the level output circuit includes a thirteenth resistor R41 and a fourteenth resistor R40. A first terminal of the thirteenth resistor R41 is connected to the non-inverting terminal of the comparator 140, and a second terminal of the thirteenth resistor R41 is grounded. A first terminal of the fourteenth resistor R40 is connected to the first terminal of the thirteenth resistor R41, and a second terminal of the fourteenth resistor R40 is connected to the second direct current power supply.

In this way, the thirteenth resistor R41 and the fourteenth resistor R40 may form a comparison level. The comparison level is input to the non-inverting terminal of the comparator 140, and the third voltage signal is input to the inverting terminal of the comparator 140. If the surge of the third voltage signal is less than or equal to the second voltage threshold, it indicates that a current increment per unit time is small, that is, the working current is relatively stable. A signal output by the protection circuit 105 may be the second level signal, and the switch transistor V1 may be turned on, so that the air conditioner 10 may operate normally. If the surge of the third voltage signal is greater than the second voltage threshold, it indicates that the current increment per unit time is large, that is, the working current is relatively unstable. A signal output by the protection circuit 105 may be the first level signal. In this case, since the first level signal is a low-level signal, the second diode D40 may output a low-level pulse signal after the first level signal passes through the second diode D40, so that the switch transistor V1 is turned off, thereby playing a role of protecting the switch transistor V1.

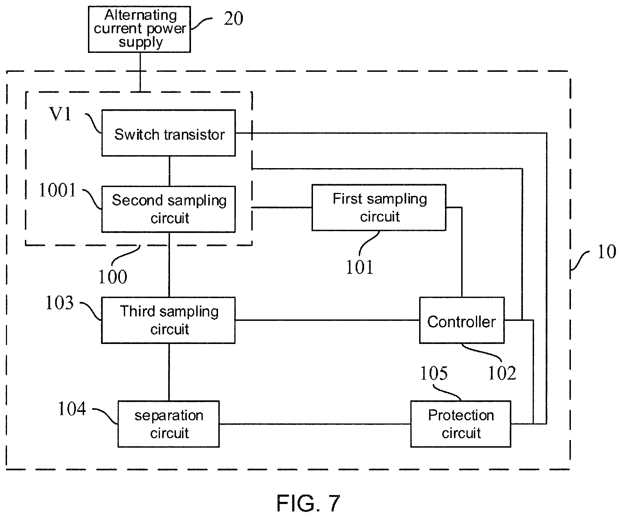

In some embodiments, as shown in FIG. 7, the controller 102 may further be connected to the third sampling circuit 103 and the protection circuit 105, and is configured to receive the second voltage signal and the first level signal, and control the switch transistor V1 to be turned off according to the second voltage signal and the first level signal; or is configured to receive the second voltage signal and the second level signal, and control the switch transistor V1 to be turned on according to the second voltage signal and the second level signal. For example, the controller 102 may be an MCU as shown in FIG. 7, and a signal output by the controller 102 may be a pulse width modulation (PWM) signal.

For example, the controller 102 may perform digital-to-analog conversion processing on the second voltage signal, and the controller 102 outputs a low-level signal (i.e., the first level signal) in a case where the second voltage signal is in the falling state. If the second voltage signal is in the falling state, it indicates that the working current is in the falling state, and the switch transistor V1 is unlikely to be impacted by the excessive current. In a case where the second voltage signal is in the rising state, if a signal received by the controller 102 from the protection circuit 105 is a high-level signal, the controller 102 may output a high-level signal (i.e., the second level signal). If the signal received by the controller 102 from the protection circuit 105 is a low-level signal (i.e., the first level signal), the controller 102 may output a low-level signal (i.e., the first level signal). In this case, the switch transistor V1 receives the first level signal from the protection circuit 105 and the first level signal from the controller 102, and is in the turn-off state. Therefore, the controller 102 and the protection circuit 105 may implement double protection for the switch transistor V1.

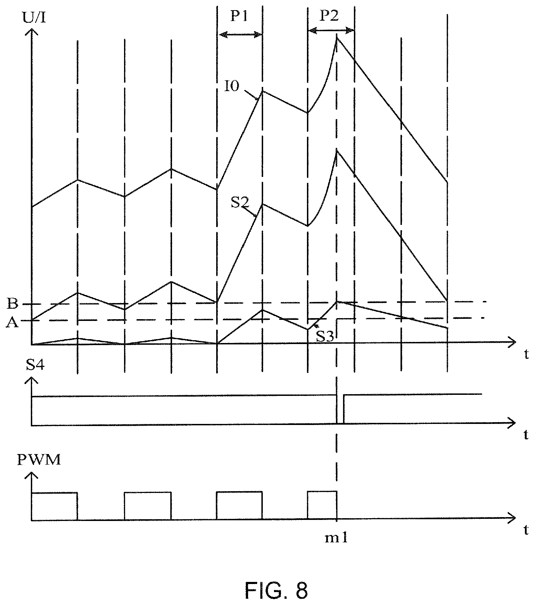

For example, as shown in FIGS. 6 and 8, in FIG. 8, I0 is used to represent the working current generated by the power supply circuit 100, S2 is used to represent the second voltage signal, A is used to represent the first voltage threshold, S3 is used to represent the third voltage signal, B is used to represent the second voltage threshold, the signal output by the protection circuit 105 is S4, and the pulse signal output by the controller 102 is the PWM signal.

As shown in FIGS. 6 and 8, within a unit time P1, the working current I0 is in the rising state, the second voltage signal S2 is also in the rising state, and the signal output by the controller 102 is a high-level signal. In addition, the value of the second voltage signal S2 is greater than the first voltage threshold A, therefore, the first diode D2 is turned on, and the separation circuit 104 may output the third voltage signal S3. The surge of the third voltage signal S3 is less than the second voltage threshold B, therefore, the signal S4 output by the protection circuit 105 is a high-level signal (second level signal). In this case, the switch transistor V1 may receive the high-level signal from the controller 102 and the protection circuit 105, and is in the turn-on state.

As shown in FIGS. 6 and 8, within a unit time P2, before a moment m1, the working current I0 is in the rising state, the second voltage signal S2 is also in the rising state, and the signal output by the controller 102 is a high-level signal. In addition, the value of the second voltage signal S2 is greater than the first voltage threshold A, therefore, the first diode D2 is turned on, and the separation circuit 104 may output the third voltage signal S3. At the moment m1, the working current I0 reaches a high value, and in a case where the surge of the third voltage signal S3 is greater than or equal to the second voltage threshold B, the signal S4 output by the protection circuit 105 is a low-level signal (i.e., the first level signal), and the controller 102 also outputs a low-level signal. In this case, the switch transistor V1 may receive the low-level signal from the protection circuit 105 and the controller 102, and is in the turn-off state. After the moment m1, the working current I0 is in the falling state to protect the switch transistor v1 from being impacted by a large current.

The air conditioner 10 in the above embodiments may adjust the target operating current according to the power supply capacity of the power grid, and may control the switch transistor V1 to be turned on or turned off according to the magnitude of the working current, so that the air conditioner 10 may be compatible with the power supply capacity of the power grid, and may not be damaged due to excessive working current.

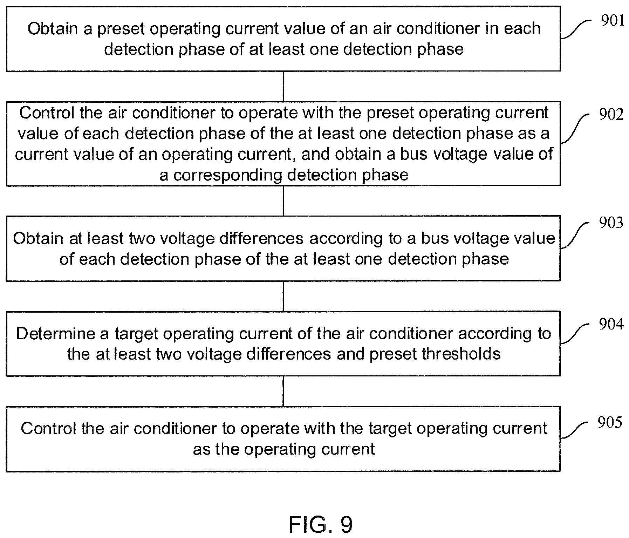

Some embodiments of the present disclosure further provide a control method for an air conditioner. The control method may be applied to the air conditioner 10 in the above embodiments and executed by the controller 102. As shown in FIG. 9, the control method includes steps 901 to 905.

In step 901, a preset operating current value of the air conditioner in each detection phase of at least one detection phase is obtained.

In step 902, the air conditioner is controlled to operate with the preset operating current value of each detection phase of the at least one detection phase as a current value of an operating current, and a bus voltage value of a corresponding detection phase is obtained.

In step 903, at least two voltage differences are obtained according to the bus voltage value of each detection phase of the at least one detection phase.

In step 904, a target operating current of the air conditioner is determined according to the at least two voltage differences and preset thresholds.

In step 905, the air conditioner is controlled to operate with the target operating current as the operating current.

In some embodiments, the at least one detection phase includes a standby detection phase, a starting detection phase, and a frequency-boost detection phase. A preset operating current value in the standby detection phase is a first preset operating current value, and a bus voltage value in the standby detection phase is a first bus voltage value. A preset operating current value in the starting detection phase is a second preset operating current value, and a bus voltage value in the starting detection phase is a second bus voltage value. A preset operating current value in the frequency-boost detection phase is a third preset operating current value, and a bus voltage value in the frequency-boost detection phase is a third bus voltage value. The preset thresholds include a first preset threshold, a second preset threshold, a third preset threshold, a fourth preset threshold, a fifth preset threshold and a sixth preset threshold.

Step 903 may include: obtaining a first voltage difference and a second voltage difference, and according to the first voltage difference and the second voltage difference. The first voltage difference is a difference between the third bus voltage value and the second bus voltage value, and the second voltage difference is a difference between the third bus voltage value and the first bus voltage value.

In some embodiments, the method for obtaining the target operating current of the air conditioner according to the first voltage difference and the second voltage difference may further include: determining the target operating current as a maximum allowable operating current value if the first voltage difference and the second voltage difference satisfy a first condition. The first condition includes that the first voltage difference is less than the first preset threshold, and the second voltage difference is less than the second preset threshold.

Alternatively, in some embodiments, the method for obtaining the target operating current of the air conditioner according to the first voltage difference and the second voltage difference may further include: determining the target operating current as a first operating current value if the first voltage difference and the second voltage difference satisfy a second condition. The second condition includes that the first voltage difference is greater than the first preset threshold and less than the third preset difference threshold, and the second voltage difference is greater than the second preset threshold and less than the fourth preset threshold. The first operating current value is less than the maximum allowable operating current value, the third preset difference threshold is greater than the first preset threshold, and the fourth preset threshold is greater than the second preset threshold.

Alternatively, in some embodiments, the method for obtaining the target operating current of the air conditioner according to the first voltage difference and the second voltage difference may further include: determining the target operating current as a second operating current value if the first voltage difference and the second voltage difference satisfy a third condition. The third condition includes that the first voltage difference is greater than the third preset threshold and less than the fifth preset threshold, and the second voltage difference is greater than the fourth preset threshold and less than the sixth preset threshold. The second operating current value is less than the first operating current value, the fifth preset threshold is greater than the third preset threshold, and the sixth preset threshold is greater than the fourth preset threshold.

Alternatively, in some embodiments, the method for obtaining the target operating current of the air conditioner according to the first voltage difference and the second voltage difference may further include: determining the target operating current as a third operating current value if the first voltage difference and the second voltage difference satisfy a fourth condition. The fourth condition includes that the first voltage difference is greater than the fifth preset threshold, and the second voltage difference is greater than the sixth preset threshold. The third operating current value is less than the second operating current value.

In some embodiments, the at least one detection phase may further include a frequency-reduction detection phase and a shutdown detection phase. A preset operating current value in the frequency-reduction detection phase is a fourth preset operating current value, and a bus voltage value in the frequency-reduction detection phase is a fourth bus voltage value. A preset operating current value in the shutdown detection phase is a fifth preset operating current value, and a bus voltage value in the shutdown detection phase is a fifth bus voltage value. The preset thresholds further include a seventh preset threshold and an eighth preset threshold.

In this case, step 903 may further include: obtaining a third voltage difference and a fourth voltage difference according to the first bus voltage value, the second bus voltage value, the fourth bus voltage value and the fifth bus voltage value. The third voltage difference is a difference between the first bus voltage value and the fifth bus voltage value, and the fourth voltage difference is a difference between the second bus voltage value and the fourth bus voltage value.

Step 904 may include: determining the target operating current according to the first voltage difference, the second voltage difference, the first condition, the second condition, the third condition and the fourth condition if the third voltage difference and the fourth voltage difference satisfy a fifth condition. The fifth condition includes that the third voltage difference is less than or equal to the seventh preset threshold, and the fourth voltage difference is less than or equal to the eighth preset threshold.

In some embodiments, if the third voltage difference and the fourth voltage difference satisfy the fifth condition, the method may further include: controlling the air conditioner to operate in the at least one detection phase again if the third voltage difference and the fourth voltage difference satisfy a sixth condition, and determining whether the third voltage difference and the fourth voltage difference satisfy the fifth condition; if so, determining the target operating current according to the first voltage difference, the second voltage difference, the first condition, the second condition, the third condition and the fourth condition; if not, obtaining the number of execution of the detection phase, and determining whether the number of execution of the detection phase reaches a preset number threshold.

In addition, if the number of execution does not reach the number threshold, the air conditioner is controlled to operate in the at least one detection phase again, and it is determined whether the third voltage difference and the fourth voltage difference satisfy the fifth condition. If the number of execution reaches the number threshold, the target operating current is determined according to the first voltage difference, the second voltage difference, the first condition, the second condition, the third condition, and the fourth condition.

The above control method for the air conditioner has the same beneficial effects as the air conditioner in some embodiments described above, which will not be repeated herein.

A person skilled in the art will understand that the scope of disclosure in the present disclosure is not limited to the specific embodiments described above, and may modify and substitute some elements of the embodiments without departing from the concept of present disclosure. The scope of the present disclosure is limited by the appended claims.

## Claims

1. An air conditioner, comprising:
a power supply circuit connected to an alternating current power supply, and configured to provide a working current to a load of the air conditioner according to the alternating current power supply;
a first sampling circuit connected to the power supply circuit, and configured to obtain a bus voltage value of the power supply circuit based on the working current; and
a controller, connected to the power supply circuit and the first sampling circuit, and configured to:
obtain a preset operating current value of the air conditioner in each detection phase of at least one detection phase;
control the air conditioner to operate with the preset operating current value of each detection phase of the at least one detection phase as a current value of an operating current, and obtain a bus voltage value of a corresponding detection phase;
obtain at least two voltage differences according to a bus voltage value of each detection phase of the at least one detection phase;
determine a target operating current of the air conditioner according to the at least two voltage differences and preset thresholds; and
control the air conditioner to operate with the target operating current as the operating current.

2. The air conditioner according to claim 1, wherein the at least one detection phase includes a standby detection phase, a starting detection phase and a frequency-boost detection phase;
a preset operating current value in the standby detection phase is a first preset operating current value, and a bus voltage value in the standby detection phase is a first bus voltage value; a preset operating current value in the starting detection phase is a second preset operating current value, and a bus voltage value in the starting detection phase is a second bus voltage value; a preset operating current value in the frequency-boost detection phase is a third preset operating current value, and a bus voltage value in the frequency-boost detection phase is a third bus voltage value; the controller is further configured to:
obtain a first voltage difference and a second voltage difference according to the first bus voltage value, the second bus voltage value and the third bus voltage value; wherein the first voltage difference is a difference between the third bus voltage value and the second bus voltage value, and the second voltage difference is a difference between the third bus voltage value and the first bus voltage value; and
obtain the target operating current of the air conditioner according to the first voltage difference, the second voltage difference and the preset thresholds.

3. The air conditioner according to claim 2, wherein the preset thresholds include a first preset threshold, a second preset threshold, a third preset threshold and a fourth preset threshold; the controller is further configured to:
determine the target operating current to be a maximum allowable operating current value if the first voltage difference and the second voltage difference satisfy a first condition; wherein the first condition includes that the first voltage difference is less than the first preset threshold, and the second voltage difference is less than the second preset threshold;
determine the target operating current to be a first operating current value if the first voltage difference and the second voltage difference satisfy a second condition; wherein the second condition includes that the first voltage difference is greater than the first preset threshold and less than the third preset difference threshold, and the second voltage difference is greater than the second preset threshold and less than the fourth preset threshold; the first operating current value is less than the maximum allowable operating current value, the third preset difference threshold is greater than the first preset threshold, and the fourth preset threshold is greater than the second preset threshold.

4. The air conditioner according to claim 3, wherein the preset thresholds further include a fifth preset threshold and a sixth preset threshold, and the controller is further configured to:
determine the target operating current to be a second operating current value if the first voltage difference and the second voltage difference satisfy a third condition; wherein the third condition includes that the first voltage difference is greater than the third preset threshold and less than the fifth preset threshold, and the second voltage difference is greater than the fourth preset threshold and less than the sixth preset threshold; the second operating current value is less than the first operating current value, the fifth preset threshold is greater than the third preset threshold, and the sixth preset threshold is greater than the fourth preset threshold; and
determine the target operating current to be a third operating current value if the first voltage difference and the second voltage difference satisfy a fourth condition; wherein the fourth condition includes that the first voltage difference is greater than the fifth preset threshold, and the second voltage difference is greater than the sixth preset threshold; the third operating current value is less than the second operating current value.

5. The air conditioner according to any one of claims 2 to 4, wherein the at least one detection phase further includes a frequency-reduction detection phase and a shutdown detection phase;
a preset operating current value in the frequency-reduction detection phase is a fourth preset operating current value, and a bus voltage value in the frequency-reduction detection phase is a fourth bus voltage value; a preset operating current value in the shutdown detection phase is a fifth preset operating current value, and a bus voltage value in the shutdown detection phase is a fifth bus voltage value; the preset thresholds further include a seventh preset threshold and an eighth preset threshold;
the controller is further configured to:
obtain a third voltage difference and a fourth voltage difference according to the first bus voltage value, the second bus voltage value, the fourth bus voltage value and the fifth bus voltage value; wherein the third voltage difference is a difference between the first bus voltage value and the fifth bus voltage value, and the fourth voltage difference is a difference between the second bus voltage value and the fourth bus voltage value; and
determine the target operating current according to the first voltage difference, the second voltage difference, the first condition, the second condition, a third condition and a fourth condition if the third voltage difference and the fourth voltage difference satisfy a fifth condition; the fifth condition includes that the third voltage difference is less than or equal to the seventh preset threshold, and the fourth voltage difference is less than or equal to the eighth preset threshold.

6. The air conditioner according to claim 5, wherein the controller is further configured to:
control the air conditioner to operate in the at least one detection phase again if the third voltage difference and the fourth voltage difference satisfy a sixth condition, and determine whether the third voltage difference and the fourth voltage difference satisfy the fifth condition;
determine the target operating current according to the first voltage difference, the second voltage difference, the first condition, the second condition, the third condition and the fourth condition if the third voltage difference and the fourth voltage difference satisfy the fifth condition;
obtain a number of execution of the at least one detection phase if the third voltage difference and the fourth voltage difference do not satisfy the fifth condition, and determine whether the number of execution reaches a preset number threshold;
control the air conditioner to operate in the at least one detection phase again if the number of execution does not reach the number threshold, and determine whether the third voltage difference and the fourth voltage difference satisfy the fifth condition; and
determine the target operating current according to the first voltage difference, the second voltage difference, the first condition, the second condition, the third condition, and the fourth condition if the number of executions reaches the number threshold.

7. The air conditioner according to any one of claims 1 to 6, wherein the power supply circuit includes a switch transistor and a second sampling circuit; the air conditioner further comprises a third sampling circuit, a separation circuit and a protection circuit;
the power supply circuit is further configured to generate the working current in a case where the switch transistor is turned on;
the second sampling circuit is configured to output a first voltage signal according to the working current;
the third sampling circuit is connected in parallel to both terminals of the second sampling circuit; the third sampling circuit is configured to suppress a common-mode interference of the first voltage signal, and output a second voltage signal according to the first voltage signal;
the separation circuit is connected to the third sampling circuit, and is configured to detect a magnitude of the second voltage signal, and output a third voltage signal in a case where a value of the second voltage signal is greater than a first voltage threshold;
the protection circuit is connected to the separation circuit and the switch transistor, and is configured to detect a surge of the third voltage signal, output a first level signal in a case where the surge of the third voltage signal is greater than a second voltage threshold, and output a second level signal in a case where the surge of the third voltage signal is less than or equal to the second voltage threshold; and
the switch transistor is configured to receive the first level signal or the second voltage signal, be in a turn-off state under control of the first level signal, and be in a turn-on state under control of the second level signal.

8. The air conditioner according to claim 7, wherein
the controller is further connected to the third sampling circuit and the protection circuit, and is configured to:
receive the second voltage signal and the first level signal, and control the switch transistor to be turned off according to the second voltage signal and the first level signal; or
receive the second voltage signal and the second level signal, and control the switch transistor to be turned on according to the second voltage signal and the second level signal.

9. The air conditioner according to any one of claims 1 to 8, wherein the third sampling circuit includes:
a third resistor, a first terminal of the third resistor being connected to a first terminal of the second sampling circuit, and a second terminal of the third resistor being connected to a first terminal of a fourth resistor;
the fourth resistor, a second terminal of the fourth resistor being connected to an output terminal of a first differential amplifier and the separation circuit;
a fifth resistor, a first terminal of the fifth resistor being connected to a second terminal of the second sampling circuit, and a second terminal of the fifth resistor being connected to a first terminal of a sixth resistor;
the sixth resistor, a second terminal of the sixth resistor being grounded;
the first differential amplifier, a negative input terminal of the first differential amplifier being connected between the second terminal of the third resistor and the first terminal of the fourth resistor, a positive input terminal of the first differential amplifier being connected between the second terminal of the fifth resistor and the first terminal of the sixth resistor, and the output terminal of the first differential amplifier being further connected to the separation circuit; and
a seventh resistor, a first terminal of the seventh resistor being connected to the positive input terminal of the first differential amplifier, and a second terminal of the seventh resistor being connected to a first direct current power supply.

10. The air conditioner according to any one of claims 7 to 9, wherein the separation circuit includes:
a differentiating circuit, an input terminal of the differentiating circuit being connected to the output terminal of the first differential amplifier, and the differentiating circuit being configured to detect the magnitude of the second voltage signal from the first differential amplifier, and output a terminal voltage signal in the case where the value of the second voltage signal is greater than the first voltage threshold; and
a differential amplifier circuit connected to an output terminal of the differentiating circuit, and the differential amplifier circuit being configured to adjust the terminal voltage signal, and output the third voltage signal.

11. The air conditioner according to claim 10, wherein the differentiating circuit includes:
a first diode, an anode of the first diode being connected to the output terminal of the first differential amplifier, and a cathode of the first diode being connected to a first terminal of a first capacitor;
the first capacitor, a second terminal of the first capacitor being connected to a first terminal of an eighth resistor;
the eighth resistor, a second terminal of the eighth resistor being grounded; and
a ninth resistor, a first terminal of the ninth resistor being connected between a first terminal of the first capacitor and the cathode of the first diode, and a second terminal of the ninth resistor being grounded.

12. The air conditioner according to claim 10 or 11, wherein the differential amplifier circuit includes:
a second differential amplifier, a positive input terminal of the second differential amplifier being connected between the second terminal of the first capacitor and the first terminal of the eighth resistor;
a tenth resistor, a first terminal of the tenth resistor being connected to a negative input terminal of the second differential amplifier, and a second terminal of the tenth resistor being grounded; and
an eleventh resistor being connected in parallel between the negative input terminal of the second differential amplifier and an output terminal of the second differential amplifier.

13. The air conditioner according to any of claims 7 to 12, wherein the protection circuit includes:
a comparator, an inverting terminal of the comparator being connected to the output terminal of the second differential amplifier, a non-inverting terminal of the comparator being connected to an output terminal of a level output circuit, and an output terminal of the comparator being connected to a cathode of a second diode;
the level output circuit, an input terminal of the level output circuit being connected to a second direct current power supply;
a twelfth resistor, a first terminal of the twelfth resistor being connected to a third direct current power supply, and a second terminal of the twelfth resistor being connected to the output terminal of the comparator; and
the second diode, an anode of the second diode being connected to a first terminal of the switch transistor.

14. The air conditioner according to claim 13, wherein the level output circuit includes:
a thirteenth resistor, a first terminal of the thirteenth resistor being connected to the non-inverting terminal of the comparator, and a second terminal of the thirteenth resistor being grounded; and
a fourteenth resistor, a first terminal of the fourteenth resistor being connected to the first terminal of the thirteenth resistor, and a second terminal of the fourteenth resistor being connected to the second direct current power supply.

15. The air conditioner according to any one of claims 1 to 14, wherein the power supply circuit includes:
a rectifying circuit, a first input terminal of the rectifying circuit being connected to a live wire of the alternating current power supply, a second input terminal of the rectifying circuit being connected to a neutral wire of the alternating current power supply, a first output terminal of the rectifying circuit being connected to a first terminal of a second capacitor, and a second output terminal of the rectifying circuit being connected to a first terminal of the second capacitor;
the second capacitor;
an inductor, a first terminal of the inductor being connected to the first terminal of the second capacitor, and a second terminal of the inductor being connected to an anode of a third diode;
the third diode, a cathode of the third diode being connected to a first terminal of a third capacitor;
the third capacitor, a second terminal of the third capacitor being grounded; and
the switch transistor, a second terminal of the switch transistor being connected between the anode of the third diode and the second terminal of the inductor, and a third terminal of the switch transistor being connected to the second terminal of the third capacitor.

16. A control method for an air conditioner applied to the air conditioner, the method comprising:
obtaining a preset operating current value of the air conditioner in each detection phase of at least one detection phase;
controlling the air conditioner to operate with the preset operating current value of each detection phase of the at least one detection phase as a current value of an operating current, and obtaining a bus voltage value of a corresponding detection phase;
obtaining at least two voltage differences according to a bus voltage value of each detection phase of the at least one detection phase;
determining a target operating current of the air conditioner according to the at least two voltage differences and preset thresholds; and
controlling the air conditioner to operate with the target operating current as the operating current.

17. The control method of the air conditioner according to claim 16, wherein the at least one detection phase includes a standby detection phase, a starting detection phase and a frequency-boost detection phase; a preset operating current value in the standby detection phase is a first preset operating current value, and a bus voltage value in the standby detection phase is a first bus voltage value; a preset operating current value in the starting detection phase is a second preset operating current value, and a bus voltage value in the starting detection phase is a second bus voltage value; a preset operating current value in the frequency-boost detection phase is a third preset operating current value, and a bus voltage value in the frequency-boost detection phase is a third bus voltage value;
obtaining the at least two voltage differences according to the bus voltage value of each detection phase of the at least one detection phase, includes:
obtaining a first voltage difference and a second voltage difference according to the first bus voltage value, the second bus voltage value and the third bus voltage value; wherein the first voltage difference is a difference between the third bus voltage value and the second bus voltage value, and the second voltage difference is a difference between the third bus voltage value and the first bus voltage value.

18. The control method of an air conditioner according to claim 17, wherein the preset thresholds include a first preset threshold, a second preset threshold, a third preset threshold, a fourth preset threshold, a fifth preset threshold, and a sixth preset threshold; determining the target operating current of the air conditioner according to the at least two voltage differences and the preset thresholds, includes:
determining the target operating current to be a maximum allowable operating current value if the first voltage difference and the second voltage difference satisfy a first condition; wherein the first condition includes that the first voltage difference is less than the first preset threshold, and the second voltage difference is less than the second preset threshold;
determining the target operating current to be a first operating current value if the first voltage difference and the second voltage difference satisfy a second condition; wherein the second condition includes that the first voltage difference is greater than the first preset threshold and less than the third preset difference threshold, and the second voltage difference is greater than the second preset threshold and less than the fourth preset threshold; the first operating current value is less than the maximum allowable operating current value, the third preset difference threshold is greater than the first preset threshold, and the fourth preset threshold is greater than the second preset threshold;
determining the target operating current to be a second operating current value if the first voltage difference and the second voltage difference satisfy a third condition; wherein the third condition includes that the first voltage difference is greater than the third preset threshold and less than the fifth preset threshold, and the second voltage difference is greater than the fourth preset threshold and less than the sixth preset threshold; the second operating current value is less than the first operating current value, the fifth preset threshold is greater than the third preset threshold, and the sixth preset threshold is greater than the fourth preset threshold; and
determining the target operating current to be a third operating current value if the first voltage difference and the second voltage difference satisfy a fourth condition; wherein the fourth condition includes that the first voltage difference is greater than the fifth preset threshold, and the second voltage difference is greater than the sixth preset threshold; the third operating current value is less than the second operating current value.

19. The control method of the air conditioner according to any one of claims 16 to 18, wherein the at least one detection phase further includes a frequency-reduction detection phase and a shutdown detection phase; a preset operating current value in the frequency-reduction detection phase is a fourth preset operating current value, and a bus voltage value in the frequency-reduction detection phase is a fourth bus voltage value; a preset operating current value in the shutdown detection phase is a fifth preset operating current value, and a bus voltage value in the shutdown detection phase is a fifth bus voltage value; the preset thresholds further include a seventh preset threshold and an eighth preset threshold;
obtaining the at least two voltage differences according to the bus voltage value of each detection phase of the at least one detection phase, and determining the target operating current of the air conditioner according to the at least two voltage differences and the preset thresholds, further includes:
obtaining a third voltage difference and a fourth voltage difference according to the first bus voltage value, the second bus voltage value, the fourth bus voltage value and the fifth bus voltage value; wherein the third voltage difference is a difference between the first bus voltage value and the fifth bus voltage value, and the fourth voltage difference is a difference between the second bus voltage value and the fourth bus voltage value; and
determining the target operating current according to the first voltage difference, the second voltage difference, the first condition, the second condition, the third condition and the fourth condition if the third voltage difference and the fourth voltage difference satisfy a fifth condition; the fifth condition includes that the third voltage difference is less than or equal to the seventh preset threshold, and the fourth voltage difference is less than or equal to the eighth preset threshold.

20. The control method of an air conditioner according to claim 19, wherein determining the target operating current according to the first voltage difference, the second voltage difference, the first condition, the second condition, the third condition and the fourth condition if the third voltage difference and the fourth voltage difference satisfy the fifth condition, includes:
controlling the air conditioner to operate in the at least one detection phase again if the third voltage difference and the fourth voltage difference satisfy a sixth condition, and determining whether the third voltage difference and the fourth voltage difference satisfy the fifth condition;
determining the target operating current according to the first voltage difference, the second voltage difference, the first condition, the second condition, the third condition and the fourth condition if the third voltage difference and the fourth voltage difference satisfy the fifth condition;
obtaining a number of execution of the at least one detection phase if the third voltage difference and the fourth voltage difference do not satisfy the fifth condition, and determining whether the number of execution of reaches a preset number threshold;
controlling the air conditioner to operate in the at least one detection phase again if the number of execution does not reach the preset number threshold, and determining whether the third voltage difference and the fourth voltage difference satisfy the fifth condition;
determining the target operating current according to the first voltage difference, the second voltage difference, the first condition, the second condition, the third condition, and the fourth condition if the number of execution reaches the number threshold.
